# FASCICULE DE BREVET EUROPEEN

(11) **EP 1 209 980 B1**
(45) Date de publication et mention de la délivrance du brevet: **22.03.2006**
(21) Numéro de dépôt: 99942893.1
(22) Date de dépôt: 17.08.1999
(51) Int. Cl.: A23C 1/12, A23C 21/06, A23C 11/04

(54) **PROCEDE DE FABRICATION D'UN SUBSTITUT DE LAIT EVAPORE**
VERFAHREN ZUR HERSTELLUNG VON EINEM ERSATZSTOFF FÜR KONDENSMILCH
METHOD FOR MAKING AN EVAPORATED MILK SUBSTITUTE

(43) Date de publication de la demande: 05.06.2002
(73) Titulaire: SOCIETE DES PRODUITS NESTLE S.A., 1800 Vevey (CH)
(72) Inventeur: WYSS, Heinz, CH-3672 Oberdiessbach (CH); ENGEL, Hans, CH-3646 Einigen (CH)
(74) Mandataire: Chautard, Cécile
(86) Numéro de dépôt international: PCT/EP1999/006091
(87) Numéro de publication internationale: WO 2001/011977

(56) Documents cités:
- EP-A- 0 433 474
- EP-A- 0 627 169
- EP-A- 0 832 565
- WO-A-96/15679
- DATABASE WPI Section Ch, Week 197951 Derwent Publications Ltd., London, GB; Class D13, AN 1979-92273B XP002135404 & SU 655 377 A (SIBE DAIRY IND RES), 9 avril 1979 (1979-04-09)

## Description

La présente invention concerne un procédé de fabrication d'un substitut de lait évaporé susceptible d'être utilisé comme agent laitier de blanchiment du café, c'est à dire à base de lait entier, dans lequel le lait est en partie substitué par du lactosérum et/ou du lactose et la matière grasse lactique peut être en partie remplacée par une graisse végétale.

L'utilisation de lactosérum est connue dans la fabrication de produits laitiers reconstitués. L'avantage d'utiliser le lactosérum comme substitut partiel de lait est essentiellement lié à son prix bas. Cependant l'utilisation de lactosérum en remplacement, même partiel du lait est une opération délicate. Il est en effet difficile d'assurer au produit une stabilité thermique et une bonne durée de conservation avec des protéines de lactosérum. Un autre problème difficile à résoudre est de préserver les qualités organoleptiques du lait frais dans un tel produit, c'est à dire d'atténuer et si possible d'éviter la présence de goût de cuit normalement associé à la concentration par évaporation.

La demande de brevet EP-A-0627169 concerne un procédé de conditionnement du lait permettant d'atteindre partiellement ces objectifs fixés. Dans le cadre de cette demande de brevet, le produit à conditionner peut être sous forme de lait entier, de lait partiellement écrémé, de lait écrémé ou de lactosérum. Le procédé comprend une étape. Cependant, cette méthode ne présente pas que des avantages: En particulier, le procédé de conditionnement ne permet pas d'éviter la sédimentation après le conditionnement, en particulier lorsque l'on stérilise le produit De plus, le goût de cuit est apparent.

La demande de brevet EP-A-0 832 565 se rapporte à un substitut de lait contenant une quantité appréciable de protéines de lactosérum dans lequel les propriétés de conservation sont satifaisantes. Le procédé de préparation est basé sur une dissolution séquentielle des protéines de lactosérum, puis de lait sans étape d'évaporation, s'agissant d'une recombinaison. Il n'est pas possible dans ce cas de préserver les qualités organoleptiques proches de celles qui caractérisent le lait frais.

La demande EP-A-0 433 474 concerne un procédé de préparation d'un produit laitier évaporé contenant de la matiére grasse, dans lequel on traite un mélange de lait entier cru et de solides non-gras du lait de manière à éviter la séparation de graisse lors de l'entreposage.

L'invention concerne donc un procédé de préparation d'un substitut de lait évaporé dont les caractéristiques organoleptiques sont proches de celles du lait frais, dans lequel on mélange un produit lactosérique liquide avec du lait frais entier, puis l'on pasteurise le mélange, on le concentre par évaporation, on réchauffe, puis l'on traite thermiquement le concentrat, on homogénéise le concentrat traité thermiquement, on le refroidit, on le conditionne et on stérilise le produit conditionné, et dans lequel, pour préparer le produit lactosérique, l'on dissout les solides de lactosérum dans un milieu aqueux dans lequel les ions Ca²⁺ libre sont tamponnés par un agent sequestrant du calcium.

Selon une variante du procédé, applicable en particulier au lait frais entier, on procède à une homogénéisation supplémentaire du concentrat avant de le réchauffer et de le traiter thermiquement.

Le produit obtenu comporte une partie importante de lactosérum en remplacement du lait dans la composition du substitut de lait. Cette substitution permet une réduction importante des coûts des matières premières utilisées. Elle présente également l'avantage que la matière première de substitution a une origine lactique. Le lactosérum peut être substitué partiellement et de préférence jusqu'à ccmcurrence d'environ la moitié par du lactose. Par la suite, dans le cadre de la présente demande de brevet, on comprendra sous le terme de "produit lactosérique" les concepts de lactosérum ou de lactosérum additionné de lactose, le lactosérum pouvant être par ailleurs plus ou moins déminéralisé.

Bien que le lactosérum soit présent en proportions importantes dans le substitut de lait, et ainsi les protéines sériques, la stabilité thermique du produit n'est pas amoindrie de ce fait, ce qui est inattendu. Ainsi, aux températures élevées, le substitut de lait réagit sensiblement comme le lait normal conditionné par les procédés classiques du point de vue de la couleur, du goût et de la consistance.

D'autre part, le substitut de lait ne présente pas ou présente peu d'ions calcium susceptibles de précipiter pour former un dépôt indésirable. En effet, les ions calcium libres sont ou bien tamponnés par l'agent séquestrant au moins partiellement dissocié, ou bien liés dans les micelles de caséine. Afin de favoriser la faible présence d'ions calcium dans le substitut de lait, il est en outre opportun d'utiliser de l'eau adoucie ou déminéralisée dans sa composition.

L'agent séquestrant ou sel de stabilisation est de préférence un phosphate ou citrate, par exemple le phosphate mono-, di- ou trisodique ou le citrate mono-, di- ou trisodique ou leurs mélanges.

Pour réaliser le substitut de lait, on utilise de préférence les quantités pondérales suivantes de matières premières: environ 10 à 12 % de solides de lait frais entier, environ 5 à 9 % de poudre de lactosérum, environ 7 à 10 % de matière grasse lactique ou végétale qui peut être n'importe quelle matière grasse végétale et est de préférence sélectionnée parmi l'huile de palme, l'huile de noix de coco, l'huile de maïs ou une combinaison de ces dernières. De plus il faut de préférence environ 0,1 à 0,3 % de lécithine, environ 0,02 à 0,03 % de carraghénate, environ 0,10 à 0,15 % d'agent séquestrant pour la dissolution et environ 0 à 0,15 % d'agent séquestrant pour la stérilisation, et environ 68 à 80 % d'eau adoucie ou de préférence d'eau déminéralisée.

L'avantage de ce procédé est qu'il permet de garantir une stabilité en température du produit fini comparable à celle du lait, malgré la présence importante de protéines de lactosérum.

Avant de commencer à dissoudre la poudre de lactosérum, il est nécessaire de préparer le milieux aqueux de dissolution. Il comprend, en poids, environ 68 à 80 % d'eau, environ 0,01 à 0,03 % de carraghénate et environ 0,1 à 0,15 % d'agent séquestrant. L'agent séquestrant et le carraghénate peuvent être incorporés à l'eau à une température de 30 à 65° C, de préférence à environ 60 à 65° C dans une première cuve de deux façons: par recirculation de l'eau à travers un distributeur de poudre amenant l'agent séquestrant et le carraghénate, ou alors par prédissolition séparée du carraghénate et de l'agent séquestrant dans une petite quantité d'eau avant de les mélanger à l'ensemble de l'eau avec agitation modérée pour former le milieux aqueux de dissolution.

Deux méthodes sont envisageables pour incorporer la poudre de lactosérum à la solution aqueuse se trouvant dans la première cuve à 30 à 65° C, de préférence à environ 60 à 65° C. La solution est recirculée à travers un distributeur de poudres présentant la poudre de lactosérum, ou alors la poudre est ajoutée directement à la solution et dissoute sous agitation vigoureuse.

Après la dissolution du lactosérum dans le milieux aqueux, il est nécessaire de laisser reposer la solution lactosérique ainsi obtenue pendant 10 min. à 4 h, de préférence pendant 10 à 45 min. à une température d'environ 40 à 65° C. Ce temps de repos est nécessaire pour permettre la réhydratation des protéines sériques.

Une fois la réhydratation des protéines effectuée, on peut mélanger la solution lactosérique avec le lait frais entier ou partiellement écrémé. En partant du lait frais, on évite le goût de cuit généralement associé à la concentration par évaporation.

Avant de passer à la suite des opérations, il faut préchauffer la solution lactique, de préférence à environ 60° C pour pouvoir y incorporer les matières grasses, notamment l'huile de beurre et/ou les huiles végétales, en présence de lécithine. Les huiles ainsi que la lécithine sont mélangées et préchauffées à environ 60 à 65° C. La phase grasse est ensuite intégrée à la solution lactique et mélangée, de préférence à l'aide d'un mélangeur statique ou d'un moulin colloïdal. Pour assurer l'équilibrage de la solution, on la laisse reposer. La période de repos est de préférence environ 25 à 35 min. si l'opération est réalisée en cuve ou 15 à 20 min. si le lait est mélangé en ligne.

A la suite de ces opérations, on réalise une pasteurisation de la solution qui peut prendre deux formes. On peut effectuer une pasteurisation indirecte pendant environ 1 à 60 s. à environ 80 à 85° C, par exemple au moyen d'un échangeur tubulaire ou à plaques.

Après la pasteurisation, on concentre la solution par évaporation dans un évaporateur à flot tombant et à multiple-effet, jusqu'à une teneur en matières sèches d'environ 28 % en poids. Le concentré est refroidi dans l'évaporateur jusqu'à environ 35 - 40° C.

On procède ensuite au préchauffage du concentrat à environ 75° C, puis on le traite thermiquement à environ 80 à 85° C, par traitement iindirect, par exemple au moyen d'un échangeur tubulaire ou à plaques pendant 1 à 30 s. ou par traitement direct pendant environ 3 à 5 s. à environ 120 à 130° C par injection direste de vapeur. Ce traitement thermique peut être de préférence suivi d'une détente flash à environ 70 à 80° C.

Dans le cas où le produit lactosérique est dissout directement dans le lait entier, on soumet de préférence le concentrat traité thermiquement à une homogénéisation en deux étages qui peut s'effectuer à une température d'environ 70 à 75° C. Le premier étage est à une pression d'environ 190 à 210 bar, le deuxième est à environ 30 à 50 bar.

Selon une variante applicable préférentiellement au cas où l'on part de lait entier frais dans lequel on dissout directement le lactosérum, on procède à une homogénéisation supplémentaire du concentrat préalablement au ou après le préchauffage, et avant le traitement thermique.

On abaisse avantageusement la température du concentrat traité thermiquement à environ 4 à 8° C. On prélève un échantillon afin de réaliser les tests de stérilisation à partir desquels les quantités d'eau et de sel de stabilisation (agent séquestrant) à ajouter à la solution sont déterminées. Le sel de stabilisation, à raison de 0 à environ 0,15 % en poids est dissout dans de l'eau et incorporé dans la solution lactique pour assurer la standardisation de la dite solution.

Finalement, on remplit les récipients destinés à la vente avec le substitut de lait ainsi obtenu en s'assurant de laisser un espace vide au-dessus du niveau du liquide pour permettre d'agiter le contenu du récipient avant l'utilisation. La stérilisation est effectuée, de préférence, pendant environ 12 à 15 min. à environ 115 à 122° C après avoir préchauffé le produit à environ 95 à 97° C.

Les exemples ci-après illustrent l'invention. Dans ceux-ci, les pourcentages et parties sont en poids, sauf indication contraire.

### Exemple 1

On dissout le carraghénate et 50 % d'hydrogénophosphate disodique en tant qu'agent séquestrant dans une première cuve contenant de l'eau adoucie à 65° C en faisant recirculer l'eau à travers un distributeur de poudres contenant les deux ingrédients précités. On dissout une poudre de lactosérum doux de fromagerie de la même façon par recirculation de la même eau additionnée de carraghénate et d'agent séquestrant par le même distributeur de poudre contenant, cette fois, la poudre de lactosérum, de manière à obtenir une solution contenant 0,02 % de carraghénate, 0,1 % d'hydrogénophosphate disodique et 20 % de matières solides. Afin de permettre la réhydratation des protéines de lactosérum, il est important de laisser reposer la solution ainsi obtenue pendant une trentaine de minutes à 60° C.

On mélange la solution de lactosérum avec du lait entier frais à 20° C dans une seconde cuve avec agitation pour assurer un bon mélange. Les proportions sont de 10,5 % de solides de lait écrémé frais pour 7 % de poudre de lactosérum doux dans l'eau.

L'étape suivante consiste à incorporer la lécithine et l'huile de palme à la solution lactique. Pour cela, on réchauffe la solution à 65° C. Séparément, on mélange la lécithine à l'huile de palme et on chauffe le mélange à 65° C. La quantité de mélange utilisé correspond à la quantité de graisse lactique qui a été enlevée en remplaçant une partie de lait entier par le lactosérum doux. On mélange la phase grasse, représentant 7,5 % dont 0,2 % de lécithine, à la solution lactique en ligne à l'aide d'un mélangeur statique.

On effectue ensuite une pasteurisation indirecte à 85° C pendant 30 s. avant de soumettre la solution lactique à une évaporation dans un évaporateur à flot tombant et à triple-effet jusqu'à une teneur en matières sèches de 28 %, la température du concentrat à la sortie de l'évaporateur étant de 35 - 40° C. On soumet ensuite le concentrat à un préchauffage à 75° C, à un traitement thermique direct à 105°C pendant 5 s par injection de vapeur, suivi d'une détente par flash et à une homogénéisation en deux étages, dans le premier à 70°C à une pression de 200 bar, puis dans le second à 30 bar à la même température.

Afin de tester la stérilisation, on refroidit la solution lactique à 6° C. Sur la base du test de stérilisation, on standardise la solution à 25 % de matière sèche avec de l'eau déminéralisée contenant sous forme dissoute la quantité d'agent séquestrant nécessaire. Pour assurer une bonne dispersion de l'agent séquestrant, la solution doit être bien mélangée avant de passer à l'étape suivante.

On remplit ensuite des boîtes avec la solution lactique de façon continue et standard, en laissant un espace vide entre le liquide et le couvercle de la boîte. Après la phase de remplissage, on préchauffe le produit à 95° C, puis on le stérilise dans son emballage à 118° C pendant 12 min. Le substitut de lait en boîte ainsi obtenu est prêt à être mis en vente.

### Exemple 2

Cet exemple concerne un substitut de lait préparé à partir de lait entier. On dissout l'hydrogénophosphate disodique dans le lait, standardisé à 7,5 % de matière grasse par addition de crème et de lécithine, puis on y ajoute le carraghénate jusqu'à complète dissolution. On mélange ensuite la poudre de lactosérum doux et on maintient le mélange sous agitation pendant 10 h de manière à réaliser l'hydratation complète des protéines de lactosérum.

Toutes les étapes du procédé sont semblables à celles de l'exemple 1, mis à part le fait que, directement après l'évaporation, c'est à dire avant le préchauffage et le traitement thermique, on soumet le concentrat à une première homogénéisation (supplémentaire par rapport à celle effectuée après le traitement thermique à l'exemple 1) à 200 bar, puis 30 bar et que le traitement thermique qui suit a lieu à 135° C pendant 5 s.

### Exemple 3

On procède comme à l'exemple 2, mis à par le fait que l'homogénéisation a lieu entre le préchauffage et le traitement thermique, et que le traitement thermique s'effectue à 105°C pendant 5 s.

## Revendications

1. Procédé de fabrication d'un substitut de lait évaporé dont les caractéristiques organoleptiques sont proches de celles du lait frais, dans lequel on mélange un produit lactosérique liquide avec du lait frais entier, puis l'on pasteurise la solution lactique, on la concentre par évaporation, on réchauffe, puis l'on traite thermiquement le concentrat, on homogénéise le concentrat traité thermiquement, on le refroidit, on le conditionne et on stérilise le produit conditionné, et **caractérisé par le fait que**, pour préparer le produit lactosérique, l'on dissout les solides de lactosérum dans un milieu aqueux dans lequel les ions Ca²⁺ libres sont tamponnés par un agent séquestrant du calcium.

2. Procédé selon la revendication 1, **caractérisé par le fait que** le lactosérum est substitué jusqu' à concurrence de la moitié, en poids, par du lactose.

3. Procédé selon la revendication 1, dans lequel, dans une première étape, l'on dissout des solides de lactosérum dans un milieu aqueux comprenant du carraghénate et un agent séquestrant du calcium, à une température de 30 à 65°C, puis que l'on mélange le lait et la solution de lactosérum lors d'une deuxième étape en phase liquide à la même température et que l'on laisse s'humidifier les dits solides de lactosérum pendant 10 min. à 4 h, cette opération d'humidification ayant lieu avant le mélange avec le lait.

4. Procédé selon la revendication 3, **caractérisé par le fait que** la dissolution du carraghénate et de l'agent séquestrant a lieu en batch, que le carraghénate est d'abord dissout dans de l'eau froide, que l'agent séquestrant est dissout séparément avant d'être intégré à une cuve contenant la totalité de l'eau et comprenant un mélangeur sous agitation modérée à 60 à 65°C.

5. Procédé selon la revendication 4, **caractérisé par le fait que** la dissolution des solides de lactosérum dans la solution aqueuse a lieu dans une cuve en batch par la recirculation de la solution à travers un distributeur de poudre délivrant la poudre de lactosérum.

6. Procédé selon la revendication 1, **caractérisé par le fait que** l'on incorpore les matières grasses, notamment l'huile de beurre et/ou les huiles végétales en présence de lécithine à une température de 60 à 65° C à la solution lactique.

7. Procédé selon la revendication 1, **caractérisé par le fait que** l'on soumet le concentrat traité thermiquement à une homogénéisation en deux étages à une température de 70 à 75° C, le premier étage étant à une pression de 190 à 210 bar et le deuxième à 30 à 50 bar.

8. Procédé selon la revendication 1, applicable au cas où l'on part de lait entier frais, **caractérisé par le fait que** l'on dissout directement le lactosérum dans le lait entier et que l'on procède à une homogénéisation supplémentaire du concentrat préalablement au ou après le préchauffage, et avant le traitement thermique.

9. Procédé selon la revendication 1, **caractérisé par le fait que** l'on ajoute jusqu'à 0,15 % en poids d'agent séquestrant au concentrat traité thermiquement et homogénéisé, puis que l'on remplit des récipients avec le substitut de lait, que l'on ferme hermétiquement les récipients remplis, qu'on les préchauffe à 95 - 97° C, puis que l'on stérilise les récipients pendant 12 à 15 min. à 115-122° C.

## Patentansprüche

1. Verfahren zur Herstellung eines Kondensmilchsubstituts, dessen organoleptische Merkmale nahe denen von Frischmilch sind, bei dem man ein flüssiges Molkeprodukt mit Frischvollmilch mischt und dann die Milchlösung pasteurisiert, durch Eindampfen konzentriert, erhitzt und dann das Konzentrat thermisch behandelt, das thermisch behandelte Konzentrat homogenisiert, kühlt und verpackt und das verpackte Produkt sterilisiert, **dadurch gekennzeichnet, dass** man zur Herstellung des Molkeprodukts die Molkefeststoffe in einem wässrigen Medium löst, in dem die freien Ca²⁺-Ionen durch ein Calcium-sequestrierendes Mittel gepuffert werden.

2. Verfahren nach Anspruch 1, **dadurch gekennzeichnet, dass** die Molke höchstens bis zur Hälfte, bezogen auf das Gewicht, durch Lactose ersetzt wird.

3. Verfahren nach Anspruch 1, bei dem man in einem ersten Schritt Molkefeststoffe in einem Carrageenat und ein Calciumsequestrierendes Mittel enthaltenden wässrigen Medium bei einer Temperatur von 30 bis 65 °C löst und dass man dann die Milch und die Molkelösung in einem zweiten Schritt in flüssiger Phase bei derselben Temperatur mischt und dass man diese Molkefeststoffe während 10 min bis 4 h sich anfeuchten lässt, wobei dieser Arbeitsgang der Anfeuchtung vor dem Mischen mit der Milch stattfindet.

4. Verfahren nach Anspruch 3, **dadurch gekennzeichnet, dass** das Lösen des Carrageenats und des Sequestrierungsmittels im Batchverfahren stattfindet, dass zuerst das Carrageenat in kaltem Wasser gelöst wird, dass das Sequestrierungsmittel getrennt gelöst wird, bevor es unter moderatem Rühren bei 60 bis 65 °C in einen mit einem Mischer versehenen Behälter eingebracht wird, der das gesamte Wasser enthält.

5. Verfahren nach Anspruch 4, **dadurch gekennzeichnet, dass** das Lösen der Molkefeststoffe in der wässrigen Lösung in einem Batchbehälter durch Rezirkulierung der Lösung über einen das Molkepulver abgebenden Pulververteiler stattfindet.

6. Verfahren nach Anspruch 1, **dadurch gekennzeichnet, dass** man Fette, insbesondere Butteröl und/oder Pflanzenfette in Gegenwart von Lecithin bei einer Temperatur von 60 bis 65 °C in die Milchlösung einbringt.

7. Verfahren nach Anspruch 1, **dadurch gekennzeichnet, dass** man das thermisch behandelte Konzentrat einer zweistufigen Homogenisierung bei 70 bis 75 °C unterzieht, wobei die erste Stufe einen Druck von 190 bis 210 bar und die zweite Stufe von 30 bis 50 bar hat.

8. Verfahren nach Anspruch 1, das auf den Fall, in dem von Frischvollmilch ausgegangen wird, anwendbar ist, **dadurch gekennzeichnet, dass** man die Molke direkt in der Vollmilch löst und dass man vor oder nach dem Vorerhitzen und vor der thermischen Behandlung eine zusätzliche Homogenisierung des Konzentrats vornimmt .

9. Verfahren nach Anspruch 1, **dadurch gekennzeichnet, dass** man dem thermisch behandelten Konzentrat bis zu 0,15 Gew.-% Sequestrierungsmittel zusetzt und homogenisiert und dass man dann Behälter mit dem Milchsubstitut füllt, dass man die befüllten Behälter luftdicht verschließt, dass man sie auf 95-97 °C vorerhitzt und dass man die Behälter dann während 12 bis 15 min bei 115 - 122 °C sterilisiert.

## Claims

1. Method for making an evaporated milk substitute of which the organoleptic properties are close to those of fresh milk, wherein a liquid whey product is mixed with whole fresh milk, the milk solution is then pasteurised, is concentrated by evaporation and is reheated, and the concentrate is then heat-treated, the heat-treated concentrate is homogenised, cooled and packaged, and the packaged product is sterilised, and **characterised in that**, in order to prepare the whey product, whey solids are dissolved in an aqueous medium in which the free Ca²⁺ ions are buffered by a calcium sequestering agent.

2. Method according to claim 1, **characterised in that** whey is substituted, up to the limit of half by weight, by lactose.

3. Method according to claim 1, wherein, in a first step, whey solids are dissolved in an aqueous medium containing carraghenate and a calcium sequestering agent, at a temperature of 30 to 65°C, milk and the whey solution are then mixed in a second step in the liquid phase at the same temperature and the said whey solids are left to take up moisture for 10 min to 4 h, this operation of taking up moisture taking place before mixing with milk.

4. Method according to claim 3, **characterised in that** the carraghenate and sequestering agent are dissolved in batches, that the carraghenate is first of all dissolved in cold water, that the sequestering agent is dissolved separately before being incorporated with moderate stirring at 60 to 65°C in a vessel containing all the water and having a stirrer.

5. Method according to claim 4, **characterised in that** the whey solids are dissolved in the aqueous solution in a vessel in batches by recirculating the solution through a powder distributor delivering the whey powder.

6. Method according to claim 1, **characterised in that** fats, in particular butter oil and/or vegetable oils are incorporated in the milk solution in the presence of lecithin at a temperature of 60 to 65°C.

7. Method according to claim 1, **characterised in that** the heat-treated concentrate is subjected to homogenisation in two stages at a temperature of 70 to 75°C, the first stage being at a pressure of 190 to 210 bar and the second stage at 30 to 50 bar.

8. Method according to claim 1, applicable to the case where the starting point is fresh whole milk, **characterised in that** whey is dissolved directly in whole milk and supplementary homogenisation of the concentrate is carried out prior to or after preheating and before heat treatment.

9. Method according to claim 1, **characterised in that** up to 0.15 % by weight of sequestering agent is added to the heat-treated and homogenised concentrate, containers are then filled with the milk substitute, the filled containers are hermetically sealed, these are preheated to 95-97°C, and the containers are sterilised for 12 to 15 min at 115-122°C.
